# EUROPÄISCHE PATENTSCHRIFT

(11) **EP 3 559 564 B1**
(45) Veröffentlichungstag und Bekanntmachung des Hinweises auf die Patenterteilung: **02.03.2022**
(21) Anmeldenummer: 17816720.1
(22) Anmeldetag: 12.12.2017
(51) Int. Cl.: F25B 7/00, F25B 6/04, F25B 9/00, F25B 11/04, F25B 30/02

(54) **VERFAHREN UND VORRICHTUNG ZUR ERZEUGUNG VON PROZESSKÄLTE UND PROZESSDAMPF**
METHOD AND APPARATUS FOR GENERATING PROCESS COLD AND PROCESS STEAM
PROCÉDÉ ET DISPOSITIF DE PRODUCTION DE FROID DE PROCESSUS ET DE VAPEUR DE PROCESSUS

(30) Priorität: 20.12.2016 DE 102016125006
(43) Veröffentlichungstag der Anmeldung: 30.10.2019
(73) Patentinhaber: Mitsubishi Power Europe GmbH, 47059 Duisburg (DE)
(72) Erfinder: BERGINS, Christian, 45711 Datteln (DE); BUDDENBERG, Torsten, 47447 Moers (DE); GERSTNER-RIEWER, Bastian, 40239 Düsseldorf (DE)
(74) Vertreter: Viering, Jentschura & Partner mbB Patent- und Rechtsanwälte
(86) Internationale Anmeldenummer: PCT/EP2017/082372
(87) Internationale Veröffentlichungsnummer: WO 2018/114468

(56) Entgegenhaltungen:
- EP-A1- 2 631 562
- WO-A1-2011/045752
- DE-A1- 3 433 366
- DE-A1- 10 138 255
- DE-A1-102010 001 929
- DE-A1-102013 210 177
- DE-B3- 10 240 767

## Beschreibung

Die Erfindung richtet sich auf ein Verfahren zur Erzeugung von Dampf und Kälte unter Zufuhr elektrischer Energie an eine Kompressionskältemaschine und eine Hochtemperaturwärmepumpe, wobei ein im Kältemittelkreislauf der Kompressionskältemaschine zirkulierendes Kältemittel und ein im Wärmeträgerfluidkreislauf der Hochtemperaturwärmepumpe zirkulierendes Wärmeträgerfluid über eine in den Kühlmittelkreislauf und den Wärmeträgerfluidkreislauf eingebundene Wärmeübertragervorrichtung in einer Wärmeenergie aus dem Kältemittelkreislauf auskoppelnden und in den Wärmeträgerfluidkreislauf einkoppelnden Wirkverbindung miteinander stehen. Weiterhin richtet sich die Erfindung auf ein Dampf- und Kälteerzeugungssystem, umfassend eine Kompressionskältemaschine und eine Hochtemperaturwärmepumpe, die über eine in den Kältemittelkreislauf der Kompressionskältemaschine und den Wärmeträgerfluidkreislauf der Hochtemperaturwärmepumpe eingebundene Wärmeübertragervorrichtung in einer Wärmeenergie aus einem im Kältemittelkreislauf der Kompressionskältemaschine zirkulierenden Kältemittel auskoppelnden und in ein im Wärmeträgerfluidkreislauf der Hochtemperaturwärmepumpe zirkulierendes Wärmeträgerfluid einkoppelnden Wirkverbindung miteinander stehen.

DE-A-34 33 366 und DE-A-10 2013 210177 offenbaren jeweils ein Verfahren und ein System zur Erzeugung von Wärme und Kälte unter Zufuhr elektrischer Energie an eine Kompressionskältemaschine und eine Hochtemperaturwärmepumpe, wobei ein im Kältemittelkreislauf der Kompressionskältemaschine zirkulierendes Kältemittel und ein im Wärmeträgerfluidkreislauf der Hochtemperaturwärmepumpe zirkulierendes Wärmeträgerfluid über eine in den Kühlmittelkreislauf und den Wärmeträgerfluidkreislauf eingebundene Wärmeübertragervorrichtung in einer Wärmeenergie aus dem Kältemittelkreislauf auskoppelnden und in den Wärmeträgerfluidkreislauf einkoppelnden Wirkverbindung miteinander stehen.

Insbesondere in Gewerbe- und Industrieparks, die in der Regel einen branchenübergreifenden Mix an Betrieben vereinigen, besteht das Bedürfnis, viele Energieversorgungssysteme und Verbraucher der eng benachbarten Firmen zu vernetzen und Prozesse zu koppeln. Durch Ausgleichs- und Synergieeffekte zwischen den verschiedenen Unternehmen lassen sich höhere Effizienzgewinne erreichen als durch eine separate Optimierung der einzelnen Anlagen. Daher werden Industrieparks häufig von einem zentralen Standortbetreiber mit Energie versorgt. Abhängig von ihrer jeweiligen Produktion unterscheiden sich bei den verschiedenen Gewerbe- und Industrieparks deren Ansprüche an die Energieversorgung. Während beispielsweise in der metallverarbeitenden Industrie Wärme im Bereich von vielen 100 °C benötigt wird, liegt das Temperaturniveau des Wärmebedarfs in der Ernährungsindustrie häufig unterhalb von 100 °C. Ebenso sind Industrieprozesse bekannt, bei welchen Kälte oder Prozesskälte benutzt wird. So wird bei der Ammoniakkondensation im Zusammenhang mit der Ammoniakherstellung nach dem Haber-Bosch-Verfahren Prozesskälte zur Ammoniakkondensation benötigt. Kälte wird beispielsweise auch bei dem Betrieb einer Molkerei mit angeschlossenem Kühlhaus benötigt, wobei in dem Kühlhaus eine Kühlleistung und in der Molkerei eine Wärmeleistung in Form von Wasserdampf benötigt wird. Es besteht daher in derartigen Gewerbe- und Industrieparks, aber auch generell in unterschiedlichen Betrieben verschiedenster Industriezweige, beispielsweise im Bereich der Chemieindustrie und der Lebensmittelindustrie, das Bedürfnis und die Notwendigkeit einerseits Prozesskälte zu erzeugen und bereitzustellen und andererseits Prozessdampf zu erzeugen und bereitzustellen.

Der Erfindung liegt daher die Aufgabe zugrunde, eine Lösung zu schaffen, die es ermöglicht, gleichzeitig Wasserdampf und Kälte für die Anwendung in industriellen Prozessen bereitzustellen.

Diese Aufgabe wird durch ein Verfahren gemäß Anspruch 1 und ein Dampf- und Kälteerzeugungssystem nach Anspruch 11 gelöst.

Zweckmäßige Ausgestaltungen und vorteilhafte Weiterbildungen der Erfindung sind Gegenstand der jeweiligen Unteransprüche.

Bei einem Verfahren der eingangs näher bezeichneten Art wird die vorstehende Aufgabe dadurch gelöst, dass in der Kompressionskältemaschine in mindestens einem im Kältemittelkreislauf angeordneten Wärmeübertrager aus einem, mit einer Temperatur von < 0 °C zuströmenden Kältefluid Kälte ausgekoppelt und in das im Kältemittelkreislauf zirkulierende und dem mindestens einen Wärmeübertrager mit einer niedrigeren Temperatur als das Kältefluid zufließende Kältemittel eingekoppelt wird, sodass die Temperatur des Kältefluids auf der Rücklaufseite des Wärmeübertragers eine niedrigere Temperatur als auf der Vorlaufseite des Wärmeübertragers aufweist, und wobei das Kältemittel in dem Kältemittelkreislauf anschließend komprimiert und dadurch erwärmt sowie derart erwärmt in dem Kältemittelkreislauf der Wärmeübertragervorrichtung zugeführt wird, wo aus dem zufließenden Kältemittel Wärmeenergie ausgekoppelt und das Wärmeträgerfluid erwärmend in das in dem Wärmeträgerfluidkreislauf der Hochtemperaturwärmepumpe zirkulierende Wärmeträgerfluid eingekoppelt wird, wobei dieses erwärmte Wärmeträgerfluid anschließend in dem Wärmeträgerfluidkreislauf durch Komprimierung derart erwärmt wird, dass der Wärmeenergieinhalt des komprimierten Wärmeträgerfluids ausreicht, um anschließend in mindestens einem weiteren, in dem Wärmeträgerfluidkreislauf angeordneten Wärmeübertrager mit aus diesem weiteren Wärmeübertrager zugeführtem Wärmeträgerfluid ausgekoppelter und in diesen mindestens einen weiteren Wärmeübertrager durchströmendes Wasser eingekoppelter Wärmeenergie das Wasser zu Dampf zu verdampfen.

Ebenso wird die vorstehende Aufgabe bei einem Dampf- und Kälteerzeugungssystem der eingangs näher bezeichneten Art dadurch gelöst, dass in der Kompressionskältemaschine in den Kältemittelkreislauf mindestens ein Wärmeübertrager eingebunden ist, mittels welchem aus einem, mit einer Temperatur von < 0 °C zufließt und mittels welchem aus dem dem Wärmeübertrager zuströmenden Kältefluid Kälte ausgekoppelt und in das im Kältemittelkreislauf zirkulierende und dem mindestens einen Wärmeübertrager mit einer niedrigeren Temperatur als das Kältefluid zufließende Kältemittel eingekoppelt wird, sodass die Temperatur des Kältefluids auf der Rücklaufseite des Wärmeübertragers eine niedrigere Temperatur als auf der Vorlaufseite des Wärmeübertragers aufweist, und wobei ein erster Verdichter oder erster Kompressor in den Kältemittelkreislauf der Kompressionskältemaschine eingebunden ist, mittels welchem das im Kältemittelkreislauf zirkulierende Kältemittel komprimiert und dadurch erwärmt sowie derart erwärmt der Wärmeübertragervorrichtung zugeführt wird, und wobei im Wärmeträgerfluidkreislauf der Hochtemperaturwärmepumpe ein zweiter Kompressor oder zweiter Verdichter angeordnet ist, mittels welchem das im Wärmeträgerfluidkreislauf zirkulierende und in der Wärmeübertragervorrichtung mittels aus dem Kältemittel übertragener Wärmeenergie erhitzte Wärmeträgerfluid auf einen solchen Druck verdichtet und dadurch erwärmt sowie derart erwärmt einem in den Wärmeträgerfluidkreislauf eingebundenen, weiteren Wärmeübertrager zugeführt wird, dass mittels in dem weiteren Wärmeübertrager aus dem Wärmeträgerfluid ausgekoppelter und an den weiteren Wärmeübertrager durchströmendes Wasser übertragener Wärmeenergie das Wasser zu Dampf verdampft wird.

Durch die Erfindung wird durch Kombination einer Kompressionskältemaschine mit einer Hochtemperaturwärmepumpe die Möglichkeit geschaffen, in dem erfindungsgemäßen Verfahren und mit dem erfindungsgemäßen Dampf- und Kälteerzeugungssystem gleichzeitig einerseits Kälte und andererseits (Wasser)Dampf aus einem zugeführten (kalten) Fluid, im Weiteren und im Zusammenhang mit der Erfindung als Kältefluid bezeichnet, für eine weitere Nutzung in angeschlossenen Prozessen zur erzeugen und zur Verfügung zu stellen. Dies geschieht zudem dadurch, dass der Kompressionskältemaschine und der Hochtemperaturwärmepumpe außer dem zuströmenden Kältefluid, aus welchem, insbesondere kalte, Wärmeenergie auskoppelbar ist, ausschließlich elektrische Energie, d.h. elektrischer Strom, als externe Energie von außen zugeführt wird.

Der Begriff "Kälte" oder "kalte Wärmeenergie" wird hier und im Weiteren in der in der Kühl- und Kältetechnik üblichen Art und Weise benutzt, wonach Kälte einen Zustand mit einer Temperatur unterhalb der Umgebungstemperatur bezeichnet. In diesem wissenschaftlich nicht ganz exakten Sinne wird "Kälte" also als das Gegenteil oder die Abwesenheit von Wärme verstanden, wie dies Eingang in die technische Fachsprache gefunden hat. Hierbei liegt die Umgebungstemperatur üblicherweise über der Temperatur eines zufließenden Kältefluids, aus welchem die "Kälte" ausgekoppelt wird. Erfindungsgemäß ist demnach vorgesehen, aus einem zugeführten Kältefluid "kalte" Wärmeenergie oder "Kälte" in ein in einem Kältemittelkreislauf einer Kompressionskältemaschine zirkulierendes Kältemittel auszukoppeln, dieses Kältemittel in dem Kältemittelkreislauf der Kompressionskältemaschine auf einen höheren Druck und eine höhere Temperatur zu verdichten, und dann in einer im Kältemittelkreislauf angeordneten Wärmeübertragervorrichtung oder Wärmeübertragereinrichtung Wärmeenergie aus dem Kältemittel auszukoppeln. Diese ausgekoppelte Wärmeenergie wird dann mittels eines anderen Teils der Wärmeübertragervorrichtung oder Wärmeübertragereinrichtung, der in den Wärmeträgerfluidkreislauf der Hochtemperaturwärmepumpe eingebunden ist, in das in diesem Wärmeträgerfluidkreislauf zirkulierende Wärmeträgerfluid eingekoppelt. Das Wärmeträgerfluid wird dann im Wärmeträgerfluidkreislauf verdichtet und auf eine höhere Temperatur erhitzt, bevor dann mittels eines weiteren Wärmeübertragers aus dem Wärmeträgerfluid Wärmeenergie derart ausgekoppelt und in diesem weiteren Wärmeübertrager zufließendes Wasser eingekoppelt wird, dass das Wasser verdampft. Auf diese Weise lässt sich durch diese Kombination einer Kompressionskältemaschine mit einer Hochtemperaturwärmepumpe einerseits Dampf erzeugen. Andererseits wird aber auch Kälte erzeugt, indem dem der Kompressionskältemaschine zufließenden Kältefluid in dem mindestens einen im Kältemittelkreislauf angeordneten Wärmeübertrager so viel (kalte) Wärmeenergie entzogen, d.h. aus diesem ausgekoppelt, wird, dass das Kältefluid nach Durchströmen dieses Wärmeübertragers auf dessen Rücklaufseite eine niedrigere Temperatur als vorher auf der einlaufseitigen Vorlaufseite aufweist, das Kältefluid also kälter ist. In diesem Sinne wird hier gleichzeitig mit dem Dampf auch "Kälte" erzeugt. Bei der Durchführung des erfindungsgemäßen Verfahrens und beim Betrieb des erfindungsgemäßen Dampf- und Kälteerzeugungssystems ist die Zufuhr von Brennstoff nicht notwendig, um den Prozessdampf zu erzeugen, so dass lediglich Strom für den Antrieb, insbesondere der Verdichter der Hochtemperaturwärmepumpe und der Kompressionskältemaschine, sowie das für die Erzeugung der Kälte genutzte Kältefluid zugeführt werden müssen. Dies ermöglicht es, eine gesamte Leistungsziffer < 2 zu erreichen, was bedeutet, dass für jede eingesetzte Kilowattstunde Strom mehr als zwei Kilowattstunden Wärme oder Kälte erzeugt werden. Dabei teilt sich die Wärmeleistung in ca. 2/3 "Kälte" und 1/3 "Dampf" oder "Prozessdampf" auf. Dabei ist es natürlich auch möglich, in den Wärmeträgerfluidkreislauf der Hochtemperaturwärmepumpe weitere Wärmequellen wie Wärme aus einem Fernwärmenetz oder Abwärme von industriellen Prozessen durch Einkopplung daraus gewonnener Energie in das Wärmeträgerfluid des Wärmeträgerfluidkreislaufs zu nutzen. Hierzu wird aus einem zuströmenden, temperierten Fluidstrom in einer im Wärmeträgerfluidkreislaut der Hochtemperaturpumpe eingebundenen Wärmeenergieeinspeisevorrichtung oder einem zusätzlichen Wärmeübertrager oder Wärmetauscher Wärmeenergie ausgekoppelt und an das im Wärmeträgerfluidkreislauf zirkulierende Wärmeträgerfluid übertragen und ausgekoppelt. Diese hier nicht näher erläuterte und in den Ausführungsbeispielen auch nicht näher dargestellte Möglichkeit sieht für diese Maßnahme die Anordnung und Einbindung einer solchen Wärmeenergieeinspeisevorrichtung in den Wärmeträgerfluidkreislauf der Hochtemperaturwärmepumpe in einem Bereich stromabwärts eines/des in dem Wärmeträgerfluidkreislauf angeordneten Expanders oder einer Entspannungsturbine oder einer/der Drossel und stromaufwärts eines/des in dem Wärmeträgerfluidkreislauf angeordneten (zweiten) Verdichters oder Kompressors vor, wobei sich die Bezeichnungen "stromaufwärts" und "stromabwärts" auf die Strömungsrichtung des in dem Wärmeträgerkreislauf zirkulierenden Wärmeträgerfluids bezieht. Einsatzgebiete für das erfindungsgemäße Verfahren und das erfindungsgemäße Dampf- und Kälteerzeugungssystem sind beispielsweise Chemieanlagen, z.B. in Haber-Bosch-Anlagen zur Ammoniakherstellung, wo Prozesskälte zur Ammoniakkondensation benötigt wird. An derartigen Standorten wird meist auch Prozessdampf für andere Prozesse benötigt, so dass hier Strom optimal als Energiequelle genutzt werden kann. Weiterhin kann die erfindungsgemäße Technik auch in der Lebensmittelindustrie genutzt werden. Als Beispiel sei hier eine Molkerei mit angeschlossenem Kühlhaus genannt. Der Kälteteil bedient dann das Kühlhaus und der Wärmeteil (Dampf) die Molkerei selber. Ebenso kann die erfindungsgemäße Technik zur Wetterkühlung von Bergwerken eingesetzt werden, so dass sich als Anwendungsspektrum beispielsweise die Anwendung in Chemieparks mit Kälteerzeugung, in der Lebensmittelindustrie mit Kühlhäusern und in Bergwerken zur Wetterkühlung ergibt.

Ein besonders geeignetes Kältemittel ist Ammoniak (NH₃) und ein besonders geeignetes Wärmeträgerfluid ist Kohlendioxid (CO₂), so dass die Erfindung in Ausgestaltung des Verfahrens vorsieht, dass in dem Kältemittelkreislauf der Kompressionskältemaschine Ammoniak (NH₃) als Kältemittel und in dem Wärmeträgerfluidkreislauf der Hochtemperaturwärmepumpe Kohlendioxid (CO₂) als Wärmeträgerfluid zirkuliert. Ebenso zeichnet sich die Erfindung in Ausgestaltung des Dampf- und Kälteerzeugungssystem dadurch aus, dass das Wärmeträgerfluid des Wärmeträgerfluidkreislaufs der Hochtemperaturwärmepumpe Kohlendioxid (CO₂) und das Kältemittel des Kältemittelkreislaufs der Kompressionskältemaschine Ammoniak (NH₃) ist. Hierbei ist es aber auch möglich, dass als Wärmeträgerfluid ebenfalls Ammoniak Verwendung findet.

Um sowohl die Kompressionskältemaschine als auch die Hochtemperaturwärmepumpe mit Strom als von außen zugeführter elektrischer Energie betreiben zu können, ist es weiterhin von Vorteil, wenn das Kältemittel in dem Kältemittelkreislauf der Kompressionskältemaschine und das Wärmeträgerfluid in dem Wärmeträgerfluidkreislauf der Hochtemperaturwärmepumpe jeweils mittels eines mit elektrischer Energie angetriebenen Verdichters oder Kompressors komprimiert werden, was die Erfindung weiterhin vorsieht.

Eine zweckmäßig Ausgestaltung des in der Kompressionskältemaschine durchgeführten Verfahrens sieht weiterhin vor, dass das komprimierte, insbesondere flüssige, Kältemittel im Kältemittelkreislauf der Kompressionskältemaschine nach Durchströmen der Wärmeübertragervorrichtung oder Wärmeübertragereinrichtung bei Durchströmen einer im Kältemittelkreislauf der Kompressionskältemaschine angeordneten Drossel oder eines Expansionsventils entspannt und vorzugsweise verdampft wird.

In analoger Weise sieht die Erfindung in Ausgestaltung des in der Hochtemperaturwärmepumpe durchgeführten Verfahrens vor, dass das komprimierte, insbesondere gasförmige, Wärmeträgerfluid im Wärmeträgerfluidkreislauf der Hochtemperaturwärmepumpe nach Durchströmen des mindestens einen weiteren Wärmeübertragers bei Durchströmen eines im Wärmeträgerfluidkreislauf angeordneten Expanders oder Schraubenexpanders oder einer Entspannungsturbine oder einer Drossel oder eines Expansionsventils entspannt wird.

Da mittels der Hochtemperaturwärmepumpe Dampf erzeugt werden soll, zeichnet sich die Erfindung in weiterer Ausgestaltung dadurch aus, dass das Wärmeträgerfluid, insbesondere Kohlendioxid (CO₂), vor seinem Eintritt in den mindestens einen weiteren Wärmeübertrager auf einen Druck von ≥ 190 bar und eine Temperatur von ≥ 190 °C verdichtet wird.

Da sich mit der Hochtemperaturwärmepumpe insbesondere ein Sattdampf mit einem Druck von 1 bar vorteilhaft erzeugen lässt, kann es wünschenswert sein, für die Erzeugung von Prozessdampf höheren Druckes und höherer Temperatur weitere Maßnahmen vorzusehen. In Weiterbildung sieht die Erfindung daher auch vor, dass der mittels des mindestens einen weiteren Wärmeübertragers erzeugte Dampf mindestens einem den Dampfdruck erhöhenden Dampfkompressor und/oder einem, insbesondere elektrisch betriebenen, Überhitzer zugeführt wird, der/die dem mindestens einen weiteren Wärmeübertrager in Dampfströmungsrichtung nachgeschaltet ist/sind.

Hierbei ist es dann zweckmäßig, wenn der in dem mindestens einen weiteren Wärmeübertrager erzeugte Dampf in dem Überhitzer auf einen Druck zwischen 1 und 5 bar gebracht wird und/oder dass der in dem mindestens einen weiteren Wärmeübertrager erzeugte Dampf in dem oder den den Dampfdruck erhöhenden Dampfkompressor(en) auf einen Druck zwischen 2 und 20 bar gebracht wird, wodurch sich die Erfindung weiterhin auszeichnet.

Eine konstruktiv besonders günstige und vorteilhafte Ausgestaltung des erfindungsgemäßen Verfahrens hinsichtlich des mechanischen Antriebes von für die Durchführung des Verfahrens benötigten rotierenden oder rotierende Elemente umfassenden Vorrichtungen, Einrichtungen, Bauteilen oder Elementen besteht darin, dass die im Wärmeträgerfluidkreislauf und im Kältemittelkreislauf angeordneten Verdichter, Kompressoren und Expander oder Entspannungsturbinen und/oder mindestens ein Teil der den Dampfdruck des erzeugten Dampfes erhöhenden Kompressoren zumindest zum Teil in mechanischer Wirkverbindung mit einem Getriebe stehen und alle von diesem einen Getriebe angetrieben werden, was die Erfindung weiterhin vorsieht.

Hierbei ist es dann besonders zweckmäßig, ein sogenanntes Bull-Gear-Getriebe oder Großradgetriebe vorzusehen, welches dann von einem einzigen Motor antreibbar ist, und wobei alle weiteren anzutreibenden Vorrichtungen, Einrichtungen, Bauteile oder Elemente, wie eben Verdichter, Kompressoren, Expander oder Entspannungsturbinen, mittels an dem einen Großrad angreifender Ritzel angetrieben werden. Die Erfindung sieht daher auch vor, dass das Getriebe als Bull-Gear-Getriebe oder Großradgetriebe ausgebildet ist und vorzugsweise von einem einzigen Motor angetrieben wird.

In Ausgestaltung des erfindungsgemäßen Dampf- und Kälteerzeugungssystem ist es weiterhin vorteilhaft, wenn der in den Kältemittelkreislauf der Kompressionskältemaschine eingebundene Teil der Wärmeübertragervorrichtung einen Kondensator für das zirkulierende Kältemittel ausbildet und der in den Wärmeträgerfluidkreislauf der Hochtemperaturwärmepumpe eingebundene Teil der Wärmeübertragervorrichtung einen Erhitzer für das zirkulierende Wärmeträgerfluid ausbildet, wodurch sich die Erfindung weiterhin auszeichnet. Hierdurch ist es möglich, einen zweckmäßigen Kältemittelkreislauf und einen zweckmäßigen Wärmeträgerfluidkreislauf auszubilden und diese vorteilhaft miteinander in einer Wärmeenergie übertragenden Wirkverbindung zu verknüpfen.

In gleichermaßen vorteilhafter Weise trägt dazu gemäß Ausgestaltung der Erfindung bei, dass der mindestens eine in den Kältemittelkreislauf der Kompressionskältemaschine eingebundene Wärmeübertrager einen Verdampfer für das zirkulierende Kältemittel ausbildet und der mindestens eine weitere, in den Wärmeträgerfluidkreislauf der Hochtemperaturwärmepumpe eingebundene Wärmeübertrager einen Gaskühler für das zirkulierende Wärmeträgerfluid ausbildet.

Die für die notwendigen Wärmeeinkopplungen und Wärmeauskopplungen notwendigen Wärmeübertrager lassen sich in vorteilhafter Weise günstig als Wärmetauscher realisieren und ausbilden. Die Erfindung sieht daher weiterhin vor, dass der in den Wärmeträgerfluidkreislauf der Hochtemperaturwärmepumpe eingebundene, als Erhitzer ausgebildete Teil der Wärmeübertragervorrichtung als Wärmetauscher, insbesondere als flüssig/Gas - Wärmetauscher, und/oder der mindestens eine weitere, in den Wärmeträgerfluidkreislauf der Hochtemperaturwärmepumpe eingebundene Wärmeübertrager als Wärmetauscher, insbesondere als Verdampfer/Gaskühler, ausgebildet ist.

Das erfindungsgemäße Dampf- und Kälteerzeugungssystem umfasst mit der Hochtemperaturwärmepumpe ein Dampferzeugungssystem, mit welchem sich Prozessdampf und/oder Heizdampf, insbesondere zur Nutzung bei industriellen Prozessen, erzeugen lässt, wobei mindestens ein in den Wärmeträgerfluidkreislauf der Hochtemperaturwärmepumpe eingebundener und insbesondere in Form eines Verdampfers/Gaskühlers ausgebildeter weiterer Wärmeübertrager den Dampf erzeugt. Diesem weiteren Wärmeübertrager sind in Strömungsrichtung des erzeugten Dampfes vorzugsweise ein insbesondere elektrisch betriebener Überhitzer und/oder mindestens ein Dampfkompressor nachgeschaltet. Die Erfindung zeichnet sich daher in weiterer Ausgestaltung dadurch aus, dass dem mindestens einen weiteren, in den Wärmeträgerfluidkreislauf der Hochtemperaturwärmepumpe eingebundenen Wärmeübertrager in Strömungsrichtung des erzeugten Dampfes mindestens ein den Dampfdruck erhöhender Dampfkompressor und/oder ein, insbesondere elektrisch betriebener, Überhitzer nachgeschaltet ist/sind. Im Unterschied zu konventionellen Dampferzeugungssystemen, die fossilen Brennstoff oder elektrischen Strom nutzen, können das erfindungsgemäße Verfahren und das erfindungsgemäße Dampf- und Kälteerzeugungssystem verschiedene Energiequellen, wie elektrischen Strom, örtlich vorhandene Kälte oder Wärme, Wärme aus einem Fernwärmenetz oder Abwärme, beispielsweise von einem industriellen Prozess, nutzen. Die verwendete Hochtemperaturwärmepumpe hebt die eingangsseitig über die Wärmeenergie in den Wärmeträgerfluidkreislauf einkoppelnde Wärmeübertragervorrichtung oder Wärmeübertragereinrichtung oder ergänzende zusätzliche Wärmeübertrager oder Wärmetauscher oder Wärmeenergieeinspeisevorrichtungen bereitgestellte Wärmeenergie oder Wärmequellentemperatur auf eine für eine Niedrigdruckdampfproduktion in einem Verdampfer, insbesondere dem als CO₂-Gaskühler/Verdampfer ausgebildeten weiteren Wärmeübertrager, geeignete Temperatur. Das Arbeitsmedium oder Wärmeträgerfluid des Wärmeträgerfluidkreislaufs der Hochtemperaturwärmepumpe wird vorzugsweise von CO₂ gebildet, kann aber auch Ammoniak sein. Nach Bildung des Niedrigdruckdampfes in dem Verdampfer aus zufließendem Wasser wird dieser Wasserdampf mittels der vorgesehenen elektrischen Überhitzung, insbesondere aber mittels des mindestens einen vorgesehenen Dampfkompressors auf den gewünschten Dampfdruck komprimiert. Dies erfolgt vorzugsweise im Rahmen einer mehrstufigen Kompression des Dampfes mit Zwischenkühlung, vorzugsweise Einspritzkühlung, so dass sichergestellt ist, dass der erhaltene komprimierte Dampf die gewünschte Temperatur aufweist. Dies ist insbesondere dann wichtig, wenn der Dampf als Prozessdampf anschließend in einem industriellen Prozess Verwendung finden soll. Das erfindungsgemäße Dampf- und Kälteerzeugungssystem zeichnet sich in weiterer Ausgestaltung daher auch dadurch aus, dass der mindestens eine Dampfkompressor eine mehrstufige Kompression des Dampfes, insbesondere mit Zwischenkühlung, vorzugsweise mit Einspritzkühlung, aufweist. Eine besonders günstige und vorteilhaft Weiterentwicklung der Erfindung besteht zudem darin, dass der Verdichter oder Kompressor des Kältemittelkreislaufs, der Verdichter oder Kompressor des Wärmeträgerfluidkreislaufs und weitere rotierende Komponenten umfassende Vorrichtungen, Einrichtungen, Bauteile oder Elemente, die in den Kältemittelkreislauf der Kompressionskältemaschine und den Wärmeträgerfluidkreislauf der Hochtemperaturwärmepumpe eingebunden sind, sowie zumindest ein Teil der den Dampfdruck des erzeugten Wasserdampfes erhöhenden Kompressoren auf einem Getriebe angeordnet sind, wobei es vorteilhaft ist, dieses Getriebe als Bull-Gear-Getriebe oder Großradgetriebe auszubilden. Die Erfindung zeichnet sich daher weiterhin dadurch aus, dass der erste Verdichter oder erste Kompressor des Kältemittelkreislaufs der Kompressionskältemaschine, der zweite Verdichter oder zweite Kompressor des Wärmeträgerfluidkreislaufs der Hochtemperaturwärmepumpe, ein Expander oder Schraubenexpander oder eine Entspannungsturbine des Wärmeträgerfluidkreislaufs der Hochtemperaturwärmepumpe und/oder der oder die oder mindestens ein Teil der den Dampfdruck des erzeugten Dampfes erhöhende(n) Kompressor(en) und auf einem Getriebe angeordnet sind, wobei es dann schließlich zudem vorteilhaft ist, dass das Getriebe als Bull-Gear-Getriebe oder Großradgetriebe ausgebildet ist und vorzugsweise von einem einzigen Motor angetrieben wird. Durch die Ausbildung der verschiedenen Kompressoren, Verdichter, Expander, Entspannungsturbinen oder ähnlichen Elementen auf einem Getriebe ist es möglich, eine klein bauende Einheit für den Antrieb dieser Elemente vorzusehen. Diese Einheit kann dann zudem von lediglich einem Motor angetrieben sein. Wenn alle Antriebsräder, die jeweils einen Kompressor antreiben oder von einem oder dem Expander angetrieben werden, um ein Sonnenrad - etwa analog zu einem Planetengetriebe - angeordnet sind, wie dies bei einem Bull-Gear-Getriebe oder Großradgetriebe der Fall ist, können damit die unterschiedlichen, jeweils an einem Antriebsrad oder Antriebsritzel angeordneten oder einem Antriebsrad oder Antriebsritzel zugeordneten Elemente oder Komponenten (Verdichter oder Kompressoren des Wärmeträgerfluidkreislaufs, Verdichter oder Kompressoren des Kältemittelkreislaufs, der Expander oder die Entspannungsturbine des Wärmeträgerfluidkreislaufs, der oder die den Dampfdruck des erzeugten Dampfes erhöhende(n) Kompressor(en)) mit unterschiedlichen Drehzahlen angetrieben oder betrieben werden, obgleich sie dann gegebenenfalls dennoch lediglich an einen Motor gekoppelt sind oder sein können.

Die Erfindung ist nachstehend anhand einer Zeichnung beispielhaft näher erläutert. Diese zeigt in
- Fig. 1: in schematischer Verfahrensdarstellung ein erstes Ausführungsbeispiel eines erfindungsgemäßen Dampf- und Kälteerzeugungssystems und in
- Fig. 2: das Dampf- und Kälteerzeugungssystem nach Fig. 1 mit nachgeschalteter dreistufiger Dampfkompression und Zuordnung detaillierter Zahlenwerte einer V (Volumen) T (Temperatur)-Berechnung.

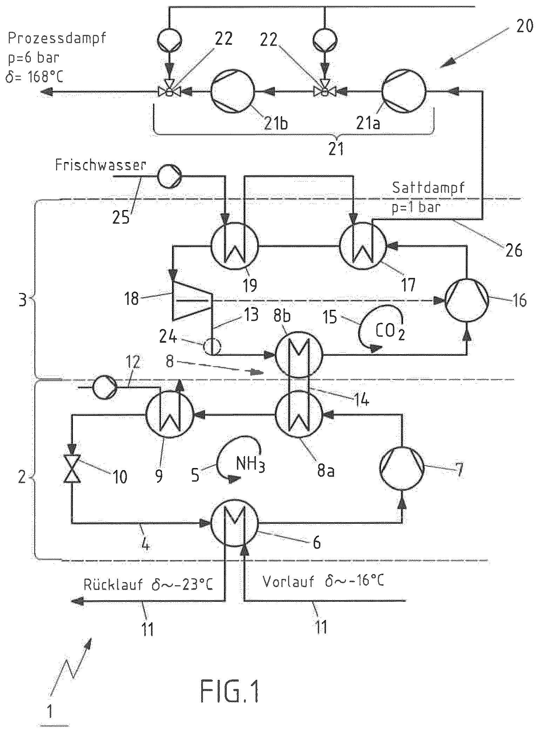

Die Fig. 1 zeigt ein insgesamt mit 1 bezeichnetes Dampf- und Kälteerzeugungssystem, das eine Kompressionskältemaschine 2 und eine Hochtemperaturwärmepumpe 3 umfasst. Die Kompressionskältemaschine 2 umfasst einen Kältemittelkreislauf 4, in welchem Ammoniak (NH₃) als Kältemittel in Pfeilrichtung 5 zirkuliert. In dem Kältemittelkreislauf 4 sind ein Wärmeübertrager 6, der als Wärmetauscher und Verdampfer ausgebildet ist, ein erster Kompressor oder erster Verdichter 7, ein als Kondensator für das im Kältemittelkreislauf 4 zirkulierende Kältemittel Ammoniak ausgebildeter Teil 8a einer Wärmeübertragervorrichtung 8 oder Wärmeübertragereinrichtung, ein als Kühler für das zirkulierende Kältemittel wirkender Wärmetauscher 9 und eine Drossel 10 oder ein Expansionsventil angeordnet und eingebunden. In dem Kältemittelkreislauf 4 wird das Kältemittel Ammoniak in dem Wärmeübertrager/Verdampfer 6 verdampft, in dem ersten Verdichter 7 komprimiert und dadurch auf eine höhere Temperatur gebracht. In dem als Kondensator ausgebildeten Teil 8a der Wärmeübertragervorrichtung 8 wird aus dem Kältemittel Wärmeenergie ausgekoppelt. In Strömungsrichtung wird das danach kältere, zirkulierende Kältemittel in dem Wärmetauscher/Kühler 9 weiter gekühlt und in der Drossel/dem Expansionsventil 10 auf den Druck entspannt und die Temperatur gekühlt, mit welchen das Kältemittel Ammoniak dann dem Wärmeübertrager/Verdampfer 6 zugeleitet wird. In dem Verdampfer 6 wird in das Kältemittel Wärmeenergie, im Ausführungsbeispiel und erfindungsgemäß Kälte, eingekoppelt, die aus einem dem Wärmeübertrager/Verdampfer 6 zuströmenden Kältefluid 11 ausgekoppelt wird. Das Kältefluid fließt mit einer Temperatur unterhalb der Umgebungstemperatur, erfindungsgemäß einer Temperatur < 0°, im Ausführungsbeispiel mit einer Temperatur von -16 °C, dem Wärmeübertrager/Verdampfer 6 zu. In dem Wärmeübertrager/Verdampfer 6 wird aus dem Kältefluid 11 Wärmeenergie ausgekoppelt und in das im Kältemittelkreislauf 4 zirkulierende Kältemittel eingekoppelt. Dadurch wird dem zufließenden Kältefluid 11 Wärme entzogen und es entsteht nutzbare Kälteleistung in der Form, dass das Kältefluid 11 nach Durchströmen des Wärmeübertragers/Verdampfers 6 dann eine niedrigere Temperatur, im Ausführungsbeispiel eine Temperatur von - 23 °C aufweist. Das zuströmende Kältefluid 11 steht somit unmittelbar und direkt ausschließlich mit dem Kältemittelkreislauf 4 in Wärme bzw. Kälte übertragender Wirkverbindung, die Kälte aus dem Kältefluid 11 auskoppelt. Insgesamt weist die Kompressionskältemaschine 2 damit einen Kältemittelkreislauf 4 auf, in welchem in üblicher Weise in Abhängigkeit vom Druck bei verschiedenen Temperaturen das Kältemittel verdampft und wieder verflüssigt wird. Um flüssiges Kältemittel zu verdampfen erfolgt in der Drossel/dem Expansionsventil 10 eine Absenkung des Drucks und wird im Wärmeübertrager/Verdampfer 6 dem Kältemittel Wärme zugeführt. In dem geschlossenen Kältemittelkreislauf 4 wird das nach dem Wärmeübertrager/Verdampfer 6 dampfförmige Kältemittel mit dem ersten Verdichter 7 auf einen hohen Druck verdichtet, bevor das dampfförmige Kältemittel (Ammoniak) danach auf dem hohen Druckniveau in dem als Kondensator im Kältemittelkreislauf 4 angeordneten Teil der Wärmeübertragervorrichtung 8 oder Wärmeübertragungseinrichtung verflüssigt. Bei dieser Verflüssigung wird wiederum Wärme abgegeben und ausgekoppelt. Zudem ist im Kältemittelkreislauf 4 noch der als Kühler ausgebildete Wärmetauscher 9 vorgesehen, dem Kühlwasser 12 zugeführt wird, in das in dem Wärmetauscher/Kühler 9 aus dem Kältemittel ausgekoppelte Wärme in das zufließende Kühlwasser eingekoppelt wird, so dass das Kühlwasser den Wärmetauscher/Kühler 9 mit einer höheren Temperatur als auf der Zulaufseite wieder verlässt.

Über die Wärmeübertragervorrichtung 8 stehen der Kältemittelkreislauf 4 der Kompressionskältemaschine 2 und der Wärmeträgerfluidkreislauf 13 der Hochtemperaturwärmepumpe 3 in einer Wärmeenergie aus dem im Kältemittelkreislauf 4 der Kompressionskältemaschine 2 zirkulierenden Kältemittel auskoppelnden und in ein im Wärmeträgerfluidkreislauf 13 der Hochtemperaturwärmepumpe 3 zirkulierendes Wärmeträgerfluid einkoppelnden Wirkverbindung miteinander. Hierzu weist die Wärmeübertragervorrichtung 8 einen Teil 8b auf, der im Wärmeträgerfluidkreislauf 13 angeordnet ist und mit welchem die Wärmeübertragervorrichtung 8 in den Wärmeträgerfluidkreislauf 13 wärmetechnisch und Wärmeenergie übertragend eingebunden ist. Die Wirkverbindung besteht darin, dass die in dem Teil 8a im Kältemittelkreislauf 4 aus dem Kältemittel ausgekoppelte Wärmeenergie mittels eines zwischen den Teilen 8a, 8b zirkulierenden weiteren Fluids 14, im Ausführungsbeispiel Wasser, an den in den Wärmeträgerfluidkreislauf 13 eingebundenen Teil 8b übertragen und dort in das im Wärmeträgerfluidkreislauf 13 zirkulierende Wärmeträgerfluid ausgekoppelt wird. In dem Wärmeträgerfluidkreislauf 13 zirkuliert in Pfeilrichtung 15 Kohlendioxid (CO₂) als Wärmeträgerfluid. Dieses wird in dem Teil 8b mittels der hier zugeführten und in das Wärmeträgerfluid ausgekoppelten Wärmeenergie erhitzt, so dass der Teil 8b der Wärmeübertragervorrichtung 8 als Erhitzer für das Wärmeträgerfluid Kohlendioxid ausgebildet ist. In dem Wärmeträgerfluidkreislauf 13 der Hochtemperaturwärmepumpe 3 sind weiterhin ein zweiter Verdichter 16, ein weiterer Wärmeübertrager 17 und ein Expander 18 angeordnet und eingebunden, wobei zwischen dem weiteren Wärmeübertrager 17 und dem Expander 18 ein weiterer Wärmetauscher 19 als Vorwärmer für die Vorwärmung von dem weiteren Wärmeübertrager 17 zugeführtem Wasser, Frischwasser oder Speisewasser angeordnet ist. Dieses zuströmende Wasser/Frischwasser/Speisewasser wird nach Durchströmen des weiteren Wärmetauschers 19 dem weiteren Wärmeübertrager 17 zugeführt und dort durch aus dem weiteren Wärmeübertrager 17 zufließendem Wärmeträgerfluid 13 ausgekoppelter Wärmeenergie zu einem Sattdampf mit einem Druck von 1 bar verdampft. Hierzu wird das Wärmeträgerfluid durch Einkoppeln von aus dem Kältemittel des Kältemittelkreislaufs 4 stammender Wärmeenergie in das Wärmeträgerfluid im Teil 8b der Wärmeübertragervorrichtung 8 erhitzt, in dem zweiten Verdichter 16 auf einen höheren Druck komprimiert und damit einhergehend auf eine höhere Temperatur erwärmt, so dass in dem weiteren Wärmeübertrager 17 aus dem Wärmeträgerfluid Kohlendioxid ausreichend Wärme auskoppelbar und in das zufließende Wasser/Frischwasser/Speisewasser einkoppelbar ist, so dass dieses beim Durchströmen des weiteren Wärmeübertragers 17 verdampft. Hierbei wird das Wärmeträgerfluid gekühlt, durchfließt dann unter weiterer Kühlung den weiteren Wärmetauscher/Vorwärmer 19 und wird dann in dem Expander 18 auf einen niedrigeren Druck entspannt, wobei gleichzeitig die Temperatur des Wärmeträgerfluids abgesenkt wird. Insofern handelt es sich um einen üblichen Kreislauf einer Hochtemperaturwärmepumpe mit Kohlendioxid (CO₂) als Wärmeträgerfluid. In analoger Weise ist aber natürlich auch eine Wärmehochtemperaturwärmepumpe mit einer Kompressionskältemaschine 2 über eine Wärmeübertragervorrichtung 8 oder Wärmeübertragereinrichtung wärmetechnisch und Wärmeenergie übertragend koppelbar, in der Ammoniak als Wärmeträgerfluid zirkuliert. Der beim Durchströmen des weiteren Wärmeübertragers 17 gebildete Sattdampf mit einem Druck von 1 bar wird in einer in Strömungsrichtung des Dampfes nachgeschalteten Dampfkompressionsanlage 20 auf den zur Verwendung als Prozessdampf gewünschten Druck komprimiert. Im Ausführungsbeispiel nach der Figur 1 umfasst die Dampfkompressionsanlage 20 einen Dampfkompressor 21 mit einer zweistufigen Kompression 21a, 21b. Zwischen den beiden Stufen 21a, 21b der zweistufigen Kompression sowie in Dampfströmungsrichtung nach der zweiten Kompression 21b sind jeweils Einspritzkühler 22 angeordnet, mit welchen jeweils Kühlwasser dem Dampf zuführbar ist. Mittels der zweistufigen Dampfkompressionsanlage 20 mit Zwischenkühlung 22 wird der zunächst erzeugte Sattdampf von 1 bar im Ausführungsbeispiel auf einen Prozessdampfdruck von 6 bar und eine Temperatur von 168° C verdichtet.

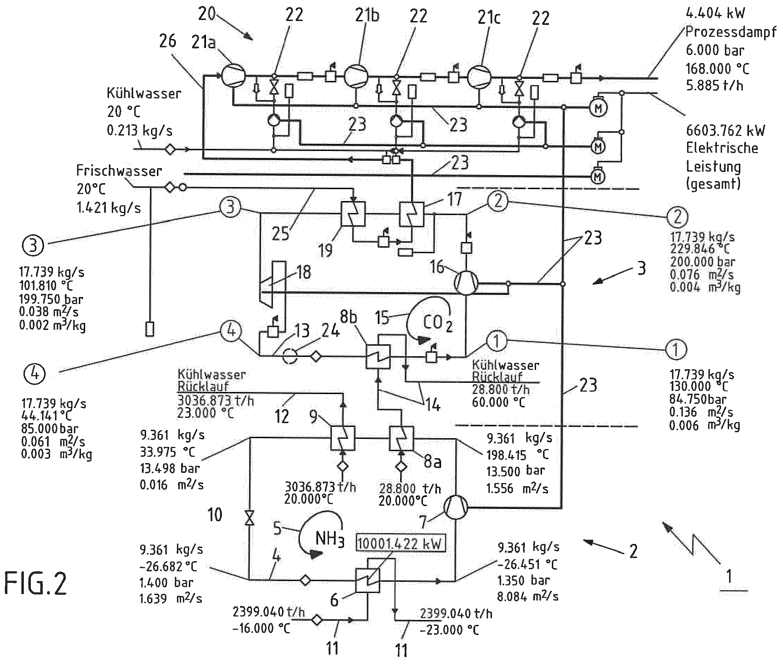

In nicht dargestellter Weise können der erste Verdichter 7, der zweite Verdichter 16, der Expander 18 und/oder die Kompressionsstufen 21a, 21b, 21c auf einem Getriebe, insbesondere einem Bull-Gear-Getriebe oder Großradgetriebe angeordnet sein, wobei das Getriebe von einem einzigen Motor, insbesondere Elektromotor, angetrieben wird. Dadurch ist es möglich, das Dampf- und Kälteerzeugungssystem 1 durch Zufuhr ausschließlich von elektrischer Energie in Form von Strom, d. h. ohne Brennstoff, zur Erzeugung von Dampf und Kälte zu betreiben. Als weitere Energiequellen werden lediglich Fluidströme zugeführt, aus welchen Wärmeenergie auskoppelbar ist. Auch wenn der erste Verdichter 7 und der zweite Verdichter 16 sowie die Kompressionsstufen 21a-21c nicht auf einem Getriebe angeordnet sind, sondern ihnen jeweils ein eigener Motor zugeordnet ist, können alle diese Komponenten mittels eines jeweils zugeordneten Elektromotors angetrieben werden. Hierbei ist es dann auch möglich, den Expander 18 oder eine an dessen Stelle ausgebildete Expansionsturbine für die (Rück)Gewinnung von Energie durch Antrieb eines Generators zu nutzen. Bei der Ausführungsform nach der Figur 2, die sich von der nach der Figur 1 lediglich darin unterscheidet, dass der Dampfkompressor 21 dreistufig ausgebildet ist und die weitere Kompressionsstufe 21c umfasst, sind die elektrischen Leitungen 23 eingezeichnet, welche entsprechenden Elektromotoren Strom zuführen.

Im Übrigen sind der Figur 2 die jeweiligen Fluidmengen oder Fluidmassenströme und Temperaturen bei Auslegung des Dampf- und Kälteerzeugungssystems 1 als 10 MW, - 20° C Kältekompressionsmaschine 2 mit verbundener 4,4 MW, 6 bar Dampf erzeugender Hochtemperaturwärmepumpe 2 mit nachgeschalteter Dampfkompressionsanlage 20 dargestellt. Dem Dampf- und Kälteerzeugungssystem 1 fließt das Kältefluid 11 in einer Menge von ca. 2400 t/h mit einer Temperatur von -16° C zu. Dieses gibt in dem Wärmeübertrager/Verdampfer 6 Wärmeenergie an das im Kältemittelkreislauf 4 zirkulierende Kältemittel Ammoniak ab und verlässt den Wärmeübertrager/Verdampfer 6 mit einer Temperatur von -23° C. Das im Kältemittelkreislauf 4 zirkulierende Kältemittel weist nach Durchströmen des Wärmeübertragers/Verdampfers 6 eine Temperatur von ca. -26,5° C bei einem Druck von 1,35 bar auf und strömt mit einem Massenstrom von ca. 9,4 kg/s und einem Volumen von 8,1 m³/s. Nach Durchströmen des ersten Verdichters 7 ist der Druck des Kältefluids auf 13,5 bar und eine Temperatur von ca. 198° C angestiegen. Der konstante Massenstrom beträgt weiterhin 9,4 kg/s, das Volumen ist hingegen auf ca. 1,6 m³/s abgesunken. Im weiteren Verlauf des Kältemittelkreislaufes 4 durchströmt das Kältemittel dann den Teil 8a der Wärmeübertragervorrichtung 8 sowie den Wärmetauscher/Kühler 9 und ist dann auf eine Temperatur von ca. 34° C bei einem Druck von 13,5 bar und einem Volumenstrom von 0,02 m³/s abgesunken. Nach Durchströmen der Drossel/des Expansionsventils 10 sinkt die Temperatur des Kältefluids dann auf ca. -27° C bei einem Druck des Kältefluids von 1,4 bar ab. Der Volumenstrom beträgt dann ca. 1,6 m³/s, mit welchen Werten das Kältefluid dem Wärmeübertrager/Verdampfer 6 zugeführt wird. In dem Teil 8a der Wärmeübertragervorrichtung 8 wird aus dem Kältefluid ausgekoppelte Wärmeenergie in einen mit einer Temperatur von 20° C und einem Massenstrom von 28,6 t/h als weiteres Fluid 14 zuströmenden Wasserstrom eingekoppelt. Als weiteres Fluid 14 führt dieser Wasserstrom die eingekoppelte Wärmeenergie dem Teil 8b der Wärmeübertragervorrichtung 8 zu.

In dem Wärmetauscher/Kühler 9 wird mit einem Massenstrom von ca. 3037 t/h und mit einer Temperatur von 20° C zufließendes Kühlwasser 12 durch Einkoppeln von aus dem Kältefluid ausgekoppelter Wärmeenergie auf 23° C erwärmt.

In dem Teil 8b der Wärmeübertragervorrichtung 8 gibt das zufließende weitere Fluid 14 Wärmeenergie an das im Wärmeträgerfluidkreislauf 13 der Hochtemperaturwärmepumpe 3 zirkulierende Wärmeträgerfluid ab und verlässt den Teil 8b mit einer Temperatur von ca. 60° C.

In dem Wärmeträgerfluidkreislauf 13 zirkuliert das Wärmeträgerfluid Kohlendioxid mit einem Massenstrom von ca. 17,7 kg/s. Es verlässt den Teil 8b der Wärmeübertragervorrichtung 8 mit einer Temperatur von 130° C bei einem Druck von ca. 84,8 bar mit einem Volumenstrom von ca. 0,14 m³/s und 0,008 m³/kg. Das Wärmeträgerfluid wird dann in dem zweiten Verdichter 16 auf einen Druck von ca. 200 bar verdichtet und dadurch auf eine Temperatur von ca. 230° C bei einem Volumenstrom von ca. 0,08 m³/s und 0,004 m³/kg verdichtet. Nach Durchströmen des weiteren Wärmeübertragers 17 und des weiteren Wärmetauschers/Vorwärmers 19 beträgt die Temperatur des Wärmeträgerfluids dann ca. 102° C bei einem Druck von ca. 199,8 bar und einem Volumenstrom von 0,036 m³/s und 0,002 m³/kg. Dieser Wärmeträgerfluidstrom wird dann in dem Expander 18 auf einen Druck von 85 bar und eine Temperatur von ca. 44° C bei einem Volumenstrom von 0,061 m³/s und 0,003 m³/kg entspannt. Dem weiteren Wärmetauscher/Vorwärmer 19 und dem weiteren Wärmeübertrager 17 strömt Wasser/Frischwasser/Speisewasser mit einer Temperatur von 20° C und einem Massenstrom von ca. 1,4 kg/s zu, welches Wasser dann in dem weiteren Wärmeübertrager 17 verdampft und nach Durchlaufen der Dampfkompressionsanlage 20 zu Prozessdampf mit einem Druck von 6 bar und einer Temperatur von 168° C bei einem Massenstrom von ca. 5,9 t/h verarbeitet wird. Insgesamt lässt sich bei diesem Ausführungsbeispiel des Dampf- und Kälteerzeugungssystems 1 ein COP-Wert (Coefficient of Performance) oder eine Leistungszahl von 2,18 erzielen, wobei der COP-Wert oder die Leistungszahl der Kompressionskältemaschine 2 2,16 und der COP-Wert oder die Leistungszahl der Hochtemperaturwärmepumpe 3 2,51 beträgt.

In nicht näher dargestellter Art und Weise lässt sich in den Wärmeträgerfluidkreislauf 13 in Strömungsrichtung des Wärmeträgerfluids stromaufwärts des Teils 8b der Wärmeübertragervorrichtung 8 ein zusätzlicher Wärmeübertrager oder Wärmetauscher 24 oder eine zusätzliche Wärmeenergieeinspeisevorrichtung anordnen und einbinden, mit welcher/welchem ein weiterer temperierter Fluidstrom zugeführt wird oder zuführbar ist, aus dem in das Wärmeträgerfluid des Wärmeträgerfluidkreislaufs 13 einzukoppelnde Wärmeenergie ausgekoppelt werden kann. Hierdurch ist die Hochtemperaturwärmepumpe auch noch an andere Wärmeenergie liefernde und als Wärmequelle nutzbare Fluidströme anschließbar, deren in der Regel Restenergie genutzt werden kann. Beispielsweise kann es sich hierbei um einen Anschluss an ein Fernwärmefluid, aber auch ein Fluid aus einem Industrieprozess oder einem Kraftwerksprozess handeln.

## Patentansprüche

1. Verfahren zur Erzeugung von Dampf und Kälte unter Zufuhr elektrischer Energie an eine Kompressionskältemaschine (2) und eine Hochtemperaturwärmepumpe (3), wobei ein im Kältemittelkreislauf (4) der Kompressionskältemaschine (2) zirkulierendes Kältemittel und ein im Wärmeträgerfluidkreislauf (13) der Hochtemperaturwärmepumpe (3) zirkulierendes Wärmeträgerfluid über eine in den Kühlmittelkreislauf (4) und den Wärmeträgerfluidkreislauf (13) eingebundene Wärmeübertragervorrichtung (8) in einer Wärmeenergie aus dem Kältemittelkreislauf (4) auskoppelnden und in den Wärmeträgerfluidkreislauf (13) einkoppelnden Wirkverbindung miteinander stehen,
wobei in der Kompressionskältemaschine (2) in mindestens einem im Kältemittelkreislauf (4) angeordneten Wärmeübertrager (6) aus einem dem mindestens einen Wärmeübertrager (6) mit einer Temperatur von < 0 °C zuströmenden Kältefluid (11) Kälte ausgekoppelt und in das im Kältemittelkreislauf (4) zirkulierende und dem mindestens einen Wärmeübertrager (6) mit einer niedrigeren Temperatur als das Kältefluid (11) zufließende Kältemittel eingekoppelt wird, sodass die Temperatur des Kältefluids (11) auf der Rücklaufseite des Wärmeübertragers (6) eine niedrigere Temperatur als auf der Vorlaufseite des Wärmeübertragers (6) aufweist, und wobei das Kältemittel in dem Kältemittelkreislauf (4) anschließend komprimiert und dadurch erwärmt sowie derart erwärmt in dem Kältemittelkreislauf (4) der Wärmeübertragervorrichtung (8) zugeführt wird, wo aus dem zufließenden Kältemittel Wärmeenergie ausgekoppelt und das Wärmeträgerfluid erwärmend in das in dem Wärmeträgerfluidkreislauf (13) der Hochtemperaturwärmepumpe (3) zirkulierende Wärmeträgerfluid eingekoppelt wird, wobei dieses erwärmte Wärmeträgerfluid anschließend in dem Wärmeträgerfluidkreislauf (13) durch Komprimierung derart erwärmt wird, dass der Wärmeenergieinhalt des komprimierten Wärmeträgerfluids ausreicht, um anschließend in mindestens einem weiteren, in dem Wärmeträgerfluidkreislauf (13) angeordneten Wärmeübertrager (17) mit aus diesem weiteren Wärmeübertrager (17) zugeführtem Wärmeträgerfluid ausgekoppelter und in diesen mindestens einen weiteren Wärmeübertrager (17) durchströmendes Wasser (25) eingekoppelter Wärmeenergie das Wasser (25) zu Dampf zu verdampfen.

2. Verfahren nach Anspruch 1, **dadurch gekennzeichnet, dass** in dem Kältemittelkreislauf (4) der Kompressionskältemaschine (2) Ammoniak (NH₃) als Kältemittel und in dem Wärmeträgerfluidkreislauf (13) der Hochtemperaturwärmepumpe (3) Kohlendioxid (CO₂) als Wärmeträgerfluid () zirkulieren.

3. Verfahren nach Anspruch 1 oder 2, **dadurch gekennzeichnet, dass** das Kältemittel in dem Kältemittelkreislauf (4) der Kompressionskältemaschine (2) und das Wärmeträgerfluid in dem Wärmeträgerfluidkreislauf (13) der Hochtemperaturwärmepumpe (3) jeweils mittels eines mit elektrischer Energie angetriebenen Verdichters (7, 16) oder Kompressors komprimiert werden.

4. Verfahren nach einem der vorhergehenden Ansprüche, **dadurch gekennzeichnet, dass** das komprimierte Kältemittel im Kältemittelkreislauf (4) der Kompressionskältemaschine (2) nach Durchströmen der Wärmeübertragervorrichtung (8) bei Durchströmen einer im Kältemittelkreislauf (4) der Kompressionskältemaschine (2) angeordneten Drossel (10) oder eines Expansionsventils entspannt und vorzugsweise verdampft wird.

5. Verfahren nach einem der vorhergehenden Ansprüche, **dadurch gekennzeichnet, dass** das komprimierte Wärmeträgerfluid im Wärmeträgerfluidkreislauf (13) der Hochtemperaturwärmepumpe (3) nach Durchströmen des mindestens einen weiteren Wärmeübertragers (17) bei Durchströmen eines im Wärmeträgerfluidkreislauf (13) angeordneten Expanders (18) oder Schraubenexpanders oder einer Entspannungsturbine oder einer Drossel oder eines Expansionsventils entspannt wird.

6. Verfahren nach einem der vorhergehenden Ansprüche, **dadurch gekennzeichnet, dass** das Wärmeträgerfluid vor seinem Eintritt in den mindestens einen weiteren Wärmeübertrager (17) auf einen Druck von ≥ 190 bar und eine Temperatur von ≥ 190 °C verdichtet wird.

7. Verfahren nach einem der vorhergehenden Ansprüche, **dadurch gekennzeichnet, dass** der mittels des mindestens einen weiteren Wärmeübertragers (17) erzeugte Dampf (26) mindestens einem den Dampfdruck erhöhenden Dampfkompressor (21) und/oder einem Überhitzer zugeführt wird, der/die dem mindestens einen weiteren Wärmeübertrager (17) in Dampfströmungsrichtung nachgeschaltet ist/sind.

8. Verfahren nach Anspruch 7, **dadurch gekennzeichnet, dass** der in dem mindestens einen weiteren Wärmeübertrager (17) erzeugte Dampf (26) in dem Überhitzer auf einen Druck zwischen 1 und 5 bar gebracht wird und/oder dass der in dem mindestens einen weiteren Wärmeübertrager (17) erzeugte Dampf (26) in dem oder den den Dampfdruck erhöhenden Dampfkompressor(en) (21) auf einen Druck zwischen 2 und 20 bar gebracht wird.

9. Verfahren nach einem der vorhergehenden Ansprüche, **dadurch gekennzeichnet, dass** die im Wärmeträgerfluidkreislauf (13) und im Kältemittelkreislauf (4) angeordneten Verdichter (7, 16), Kompressoren und Expander (18) oder Entspannungsturbinen und/oder mindestens ein Teil der den Dampfdruck des erzeugten Dampfes (26) erhöhenden Kompressoren (21; 21a - 21c) zumindest zum Teil in mechanischer Wirkverbindung mit einem Getriebe stehen und alle von diesem einen Getriebe angetrieben werden.

10. Verfahren nach Anspruch 9, **dadurch gekennzeichnet, dass** das Getriebe als Bull-Gear-Getriebe oder Großradgetriebe ausgebildet ist und vorzugsweise von einem einzigen Motor angetrieben wird.

11. Dampf- und Kälteerzeugungssystem (1) zur Durchführung eines Verfahrens nach einem der Ansprüche 1 - 10, umfassend eine Kompressionskältemaschine (2) und eine Hochtemperaturwärmepumpe (3), die über eine in den Kältemittelkreislauf (4) der Kompressionskältemaschine (2) und den Wärmeträgerfluidkreislauf (13) der Hochtemperaturwärmepumpe (3) eingebundene Wärmeübertragervorrichtung (8) in einer Wärmeenergie aus einem im Kältemittelkreislauf (4) der Kompressionskältemaschine (2) zirkulierenden Kältemittel auskoppelnden und in ein im Wärmeträgerfluidkreislauf (13) der Hochtemperaturwärmepumpe (3) zirkulierendes Wärmeträgerfluid einkoppelnden Wirkverbindung miteinander stehen, wobei in der Kompressionskältemaschine (2) in den Kältemittelkreislauf (4) mindestens ein Wärmeübertrager (6) eingebunden ist, dem ein Kältefluid (11) mit einer Temperatur von < 0 °C zufließt und mittels welchem aus dem dem Wärmeübertrager (6) zuströmenden Kältefluid (11) Kälte ausgekoppelt und in das im Kältemittelkreislauf (4) zirkulierende und dem mindestens einen Wärmeübertrager (6) mit einer niedrigeren Temperatur als das Kältefluid (11) zufließende Kältemittel eingekoppelt wird, sodass die Temperatur des Kältefluids (11) auf der Rücklaufseite des Wärmeübertragers (6) eine niedrigere Temperatur als auf der Vorlaufseite des Wärmeübertragers (6) aufweist, und wobei ein erster Verdichter (7) oder erster Kompressor in den Kältemittelkreislauf (4) der Kompressionskältemaschine (2) eingebunden ist, mittels welchem das im Kältemittelkreislauf (4) zirkulierende Kältemittel komprimiert und dadurch erwärmt sowie derart erwärmt der Wärmeübertragervorrichtung (8) zugeführt wird, und wobei im Wärmeträgerfluidkreislauf (13) der Hochtemperaturwärmepumpe (3) ein zweiter Kompressor oder zweiter Verdichter (16) angeordnet ist, mittels welchem das im Wärmeträgerfluidkreislauf (13) zirkulierende und in der Wärmeübertragervorrichtung (8) mittels aus dem Kältemittel übertragener Wärmeenergie erhitzte Wärmeträgerfluid auf einen solchen Druck verdichtet und dadurch erwärmt sowie derart erwärmt einem in den Wärmeträgerfluidkreislauf (13) eingebundenen, weiteren Wärmeübertrager (17) zugeführt wird, dass mittels in dem weiteren Wärmeübertrager (17) aus dem Wärmeträgerfluid ausgekoppelter und an den weiteren Wärmeübertrager (17) durchströmendes Wasser (25) übertragener Wärmeenergie das Wasser (25) zu Dampf verdampft wird.

12. Dampf- und Kälteerzeugungssystem (1) nach Anspruch 11, **dadurch gekennzeichnet, dass** das Wärmeträgerfluid des Wärmeträgerfluidkreislaufs (13) der Hochtemperaturwärmepumpe (3) Kohlendioxid (CO₂) und das Kältemittel des Kältemittelkreislaufs (4) der Kompressionskältemaschine (2) Ammoniak (NH₃) ist.

13. Dampf- und Kälteerzeugungssystem (1) nach Anspruch 11 oder 12, **dadurch gekennzeichnet, dass** der in den Kältemittelkreislauf (4) der Kompressionskältemaschine (2) eingebundene Teil (8a) der Wärmeübertragervorrichtung (8) einen Kondensator für das zirkulierende Kältemittel ausbildet und der in den Wärmeträgerfluidkreislauf (13) der Hochtemperaturwärmepumpe (3) eingebundene Teil (8b) der Wärmeübertragervorrichtung (8) einen Erhitzer für das zirkulierende Wärmeträgerfluid ausbildet.

14. Dampf- und Kälteerzeugungssystem (1) nach einem der Ansprüche 11 bis 13, **dadurch gekennzeichnet, dass** der mindestens eine in den Kältemittelkreislauf (4) der Kompressionskältemaschine (2) eingebundene Wärmeübertrager (6) einen Verdampfer für das zirkulierende Kältemittel ausbildet und der mindestens eine weitere, in den Wärmeträgerfluidkreislauf (13) der Hochtemperaturwärmepumpe (3) eingebundene Wärmeübertrager (17) einen Gaskühler für das zirkulierende Wärmeträgerfluid ausbildet.

15. Dampf- und Kälteerzeugungssystem (1) nach einem der Ansprüche 11 bis 14, **dadurch gekennzeichnet, dass** der in den Wärmeträgerfluidkreislauf (13) der Hochtemperaturwärmepumpe (3) eingebundene, als Erhitzer ausgebildete Teil (8b) der Wärmeübertragervorrichtung (8) als Wärmetauscher und/oder der mindestens eine weitere, in den Wärmeträgerfluidkreislauf (13) der Hochtemperaturwärmepumpe (3) eingebundene Wärmeübertrager (17) als Wärmetauscher ausgebildet ist.

16. Dampf- und Kälteerzeugungssystem (1) nach einem der Ansprüche 11 bis 15, **dadurch gekennzeichnet, dass** dem mindestens einen weiteren, in den Wärmeträgerfluidkreislauf (13) der Hochtemperaturwärmepumpe (3) eingebundenen Wärmeübertrager (17) in Strömungsrichtung des erzeugten Dampfes (26) mindestens ein den Dampfdruck erhöhender Dampfkompressor (21) und/oder ein Überhitzer nachgeschaltet ist/sind.

17. Dampf- und Kälteerzeugungssystem (1) nach Anspruch 16, **dadurch gekennzeichnet, dass** der mindestens eine Dampfkompressor (21) eine mehrstufige Kompression (21a, 21b, 21c) des Dampfes (26) aufweist.

18. Dampf- und Kälteerzeugungssystem (1) nach einem der Ansprüche 11 bis 17, **dadurch gekennzeichnet, dass** der erste Verdichter (7) oder erste Kompressor des Kältemittelkreislaufs (4) der Kompressionskältemaschine (2), der zweite Verdichter (16) oder zweite Kompressor des Wärmeträgerfluidkreislaufs (13) der Hochtemperaturwärmepumpe (3), ein Expander (18) oder Schraubenexpander oder eine Entspannungsturbine des Wärmeträgerfluidkreislaufs (13) der Hochtemperaturwärmepumpe (3) und/oder der oder die oder mindestens ein Teil der den Dampfdruck des erzeugten Dampfes (26) erhöhende(n) Kompressor(en) (21; 21a, 21b, 21c) und auf einem Getriebe angeordnet sind.

19. Dampf- und Kälteerzeugungssystem (1) nach Anspruch 18, **dadurch gekennzeichnet, dass** das Getriebe als Bull-Gear-Getriebe oder Großradgetriebe ausgebildet ist und vorzugsweise von einem einzigen Motor angetrieben wird.

## Claims

1. Method for generating steam and cold while supplying electrical energy to a compression refrigeration machine (2) and a high-temperature heat pump (3), wherein a refrigerant circulating in the refrigerant circuit (4) of the compression refrigeration machine (2) and a heat transfer fluid circulating in the heat transfer fluid circuit (13) of the high-temperature heat pump (3) are in operative connection with one another via a heat transfer device (8) incorporated in the refrigerant circuit (4) and the heat transfer fluid circuit (13), extracting thermal energy from the refrigerant circuit (4) and introducing it into the heat transfer fluid circuit (13),
wherein in the compression refrigeration machine (2) in at least one heat transfer device (6) arranged in the refrigerant circuit (4) cold is extracted from a refrigerant fluid (11) flowing to the at least one heat transfer device (6) at a temperature of < 0 °C and is introduced into the refrigerant circulating in the refrigerant circuit (4) and flowing to the at least one heat transfer device (6) at a lower temperature than the refrigerant fluid (11), so that the temperature of the refrigerant fluid (11) on the return side of the heat transfer device (6) has a lower temperature than on the flow side of the heat transfer device (6), and wherein the refrigerant fluid in the refrigerant circuit (4) is subsequently compressed and thereby heated and, thus heated, is fed in the refrigerant circuit (4) to the heat transfer device (8), where thermal energy is extracted from the inflowing refrigerant and is introduced in a manner heating the heat transfer fluid into the heat transfer fluid circulating in the heat transfer fluid circuit (13) of the high-temperature heat pump (3), this heated heat transfer fluid then being heated in the heat transfer fluid circuit (13) by compression in such a manner that the thermal energy content of the compressed heat transfer fluid is sufficient to subsequently, in at least one further heat transfer device (17) arranged in the heat transfer fluid circuit (13), with heat energy extracted from heat transfer fluid fed to this further heat transfer device (17) and introduced in water (25) flowing through this at least one further heat transfer device (17), evaporate the water (25) to steam.

2. Method according to claim 1, **characterized in that** ammonia (NH₃) circulates as refrigerant in the refrigerant circuit (4) of the compression refrigeration machine (2) and carbon dioxide (CO₂) circulates as heat transfer fluid () in the heat transfer fluid circuit (13) of the high-temperature heat pump (3).

3. Method according to claim 1 or 2, **characterized in that** the refrigerant in the refrigerant circuit (4) of the compression refrigeration machine (2) and the heat transfer fluid in the heat transfer fluid circuit (13) of the high-temperature heat pump (3) are each compressed by means of a compressor (7, 16) or compressor driven by electrical energy.

4. Method according to any one of the preceding claims, **characterized in that** the compressed refrigerant is expanded and preferably evaporated in the refrigerant circuit (4) of the compression refrigeration machine (2) after flowing through the heat transfer device (8) when flowing through a throttle (10) arranged in the refrigerant circuit (4) of the compression refrigeration machine (2) or an expansion valve.

5. Method according to any one of the preceding claims, **characterized in that** the compressed heat transfer fluid is expanded in the heat transfer fluid circuit (13) of the high-temperature heat pump (3) after flowing through the at least one further heat transfer device (17) when flowing through an expander (18) or screw expander arranged in the heat transfer fluid circuit (13) or an expansion turbine or a throttle or an expansion valve.

6. Method according to any one of the preceding claims, **characterized in that** the heat transfer fluid, prior to its entry into the at least one further heat transfer device (17), is compressed to a pressure of ≥ 190 bar and a temperature of ≥ 190 °C.

7. Method according to any one of the preceding claims, **characterized in that** the steam (26) generated by means of the at least one further heat transfer device (17) is fed to at least one steam compressor (21) increasing the steam pressure and/or to a superheater which is/are connected downstream of the at least one further heat transfer device (17) in the steam flow direction.

8. Method according to claim 7, **characterized in that** the steam (26) generated in the at least one further heat transfer device (17) is brought to a pressure between 1 and 5 bar in the superheater and/or **in that** the steam (26) generated in the at least one further heat transfer device (17) is brought to a pressure between 2 and 20 bar in the steam compressor(s) (21) increasing the steam pressure.

9. Method according to any one of the preceding claims, **characterized in that** the compressors (7, 16), compressors and expanders (18) or expansion turbines arranged in the heat transfer fluid circuit (13) and in the refrigerant circuit (4) and/or at least a part of the compressors (21; 21a - 21c) increasing the steam pressure of the generated steam (26) are at least partially in mechanical operative connection with a transmission and are all driven by this one transmission.

10. Method according to claim 9, **characterized in that** the transmission is formed as a bull gear transmission or large gear transmission and is preferably driven by a single motor.

11. Steam and cold generation system (1) for carrying out a method according to any one of claims 1 - 10, comprising a compression refrigeration machine (2) and a high-temperature heat pump (3), which are operatively connected to one another via a heat transfer device (8) incorporated into the refrigerant circuit (4) of the compression refrigeration machine (2) and the heat transfer fluid circuit (13) of the high-temperature heat pump (3), extracting thermal energy from a refrigerant circulating in the refrigerant circuit (4) of the compression refrigeration machine (2) and introducing thermal energy into a heat transfer fluid circulating in the heat transfer fluid circuit (13) of the high-temperature heat pump (3), wherein in the compression refrigeration machine (2) at least one heat transfer device (6) is incorporated in the refrigerant circuit (4), to which a refrigerant fluid (11) with a temperature of < 0 °C flows and by means of which cold is extracted from the refrigerant fluid (11) flowing to the heat transfer device (6) and is introduced into the refrigerant circulating in the refrigerant circuit (4) and flowing to the at least one heat transfer device (6) with a lower temperature than the refrigerant fluid (11), so that the temperature of the refrigerant fluid (11) on the return side of the heat transfer device (6) has a lower temperature than on the flow side of the heat transfer device (6), and wherein a first compressor (7) or first compressor is incorporated into the refrigerant circuit (4) of the compression refrigeration machine (2), by means of which the refrigerant circulating in the refrigerant circuit (4) is compressed and thereby heated and, thus heated, is supplied to the heat transfer device (8), and wherein a second compressor or second compressor (16) is arranged in the heat transfer fluid circuit (13) of the high-temperature heat pump (3), by means of which the heat transfer fluid circulating in the heat transfer fluid circuit (13) and heated in the heat transfer device (8) by means of thermal energy transferred from the refrigerant is compressed to such a pressure and thereby heated and, thus heated, is fed to a further heat transfer device (17) incorporated in the heat transfer fluid circuit (13), in such a way that, by means of thermal energy extracted from the heat transfer fluid in the further heat transfer device (17) and transferred to water (25) flowing through the further heat transfer device (17), the water (25) is evaporated to steam.

12. Steam and cold generation system (1) according to claim 11, **characterized in that** the heat transfer fluid of the heat transfer fluid circuit (13) of the high-temperature heat pump (3) is carbon dioxide (CO₂) and the refrigerant of the refrigerant circuit (4) of the compression refrigeration machine (2) is ammonia (NH₃) .

13. Steam and cold generation system (1) according to claim 11 or 12, **characterized in that** the part (8a) of the heat transfer device (8) incorporated in the refrigerant circuit (4) of the compression refrigeration machine (2) forms a condenser for the circulating refrigerant and the part (8b) of the heat transfer device (8) incorporated in the heat transfer fluid circuit (13) of the high-temperature heat pump (3) forms a heater for the circulating heat transfer fluid.

14. Steam and cold generation system (1) according to any one of claims 11 to 13, **characterized in that** the at least one heat transfer device (6) incorporated in the refrigerant circuit (4) of the compression refrigeration machine (2) forms an evaporator for the circulating refrigerant and the at least one further heat transfer device (17) incorporated in the heat transfer fluid circuit (13) of the high-temperature heat pump (3) forms a gas cooler for the circulating heat transfer fluid.

15. Steam and cold generation system (1) according to any one of claims 11 to 14, **characterized in that** the part (8b) of the heat transfer device (8) incorporated in the heat transfer fluid circuit (13) of the high-temperature heat pump (3) and configured as a heater is configured as a heat exchanger and/or the at least one further heat transfer device (17) incorporated in the heat transfer fluid circuit (13) of the high-temperature heat pump (3) is configured as a heat exchanger.

16. Steam and cold generation system (1) according to any one of claims 11 to 15, **characterized in that** at least one steam compressor (21) increasing the steam pressure and/or a superheater is/are connected downstream of the at least one further heat transfer device (17) incorporated into the heat transfer fluid circuit (13) of the high-temperature heat pump (3) in the flow direction of the generated steam (26).

17. Steam and cold generation system (1) according to claim 16, **characterized in that** the at least one steam compressor (21) has a multi-stage compression (21a, 21b, 21c) of the steam (26).

18. Steam and cold generation system (1) according to any one of claims 11 to 17, **characterized in that** the first compressor (7) or first compressor of the refrigerant circuit (4) of the compression refrigeration machine (2), the second compressor (16) or second compressor of the heat transfer fluid circuit (13) of the high-temperature heat pump (3), an expander (18) or screw expander or expansion turbine of the heat transfer fluid circuit (13) of the high-temperature heat pump (3) and/or the or at least part of the compressor(s) (21; 21a, 21b, 21c) increasing the steam pressure of the generated steam (26) are arranged on a transmission.

19. Steam and cold generation system (1) according to claim 18, **characterized in that** the transmission is configured as a bull gear transmission or large gear transmission and is preferably driven by a single motor.

## Revendications

1. Procédé pour générer de la vapeur et du froid tout en alimentant en énergie électrique une machine frigorifique à compression (2) et une pompe à chaleur haute température (3), dans lequel un réfrigérant circulant dans le circuit de réfrigérant (4) de la machine frigorifique à compression (2) et un fluide caloporteur circulant dans le circuit de fluide caloporteur (13) de la pompe à chaleur haute température (3) sont en connexion opérationnelle l'un avec l'autre par l'intermédiaire d'un dispositif de transfert de chaleur (8) incorporé dans le circuit de réfrigérant (4) et le circuit de fluide caloporteur (13), extrayant l'énergie thermique du circuit de réfrigérant (4) et l'introduisant dans le circuit de fluide caloporteur (13),
dans lequel, dans la machine frigorifique à compression (2), dans au moins un dispositif de transfert de chaleur (6) disposé dans le circuit de réfrigérant (4), le froid est extrait d'un fluide réfrigérant (11) s'écoulant vers ledit au moins un dispositif de transfert de chaleur (6) à une température < 0 °C et est introduit dans le réfrigérant circulant dans le circuit de réfrigérant (4) et s'écoulant vers ledit au moins un dispositif de transfert de chaleur (6) à une température inférieure à celle du fluide réfrigérant (11), de sorte que la température du fluide réfrigérant (11) du côté retour du dispositif de transfert de chaleur (6) a une température inférieure à celle du côté départ du dispositif de transfert de chaleur (6), et dans lequel le réfrigérant dans le circuit de réfrigérant (4) est ensuite comprimé et ainsi chauffé et, ainsi chauffé, est amené dans le circuit de réfrigérant (4) au dispositif de transfert de chaleur (8), où de l'énergie thermique est extraite du réfrigérant entrant et est introduite de manière à chauffer le fluide caloporteur dans le fluide caloporteur circulant dans le circuit de fluide caloporteur (13) de la pompe à chaleur haute température (3), ce fluide caloporteur chauffé étant ensuite chauffé dans le circuit de fluide caloporteur (13) par compression de telle sorte que la teneur en énergie thermique du fluide caloporteur comprimé soit suffisante pour ensuite, dans au moins un autre dispositif de transfert de chaleur (17) disposé dans le circuit de fluide caloporteur (13), évaporer l'eau (25) en vapeur avec de l'énergie thermique extraite du fluide caloporteur amené à cet autre dispositif de transfert de chaleur (17) et introduite dans l'eau (25) s'écoulant à travers cet au moins un autre dispositif de transfert de chaleur (17).

2. Procédé selon la revendication 1, **caractérisé en ce que** l'ammoniac (NH₃) circule comme réfrigérant dans le circuit de réfrigérant (4) de la machine frigorifique à compression (2) et le dioxyde de carbone (CO₂) circule comme fluide caloporteur () dans le circuit de fluide caloporteur (13) de la pompe à chaleur haute température (3).

3. Procédé selon la revendication 1 ou 2, **caractérisé en ce que** le réfrigérant dans le circuit de réfrigérant (4) de la machine frigorifique à compression (2) et le fluide caloporteur dans le circuit de fluide caloporteur (13) de la pompe à chaleur haute température (3) sont chacun comprimés au moyen d'un compresseur (7, 16) ou d'un compresseur entraîné par l'énergie électrique.

4. Procédé selon l'une quelconque des revendications précédentes, **caractérisé en ce que** le réfrigérant comprimé est détendu et de préférence évaporé dans le circuit de réfrigérant (4) de la machine frigorifique à compression (2) après avoir traversé le dispositif de transfert de chaleur (8) lors du passage d'un étranglement (10) disposé dans le circuit de réfrigérant (4) de la machine frigorifique à compression (2) ou d'une vanne de détente.

5. Procédé selon l'une quelconque des revendications précédentes, **caractérisé en ce que** le fluide caloporteur comprimé est détendu dans le circuit de fluide caloporteur (13) de la pompe à chaleur haute température (3) après avoir traversé l'au moins un autre dispositif de transfert de chaleur (17) lors de son passage dans un détendeur (18) ou un détendeur à vis disposé dans le circuit de fluide caloporteur (13) ou une turbine de détente ou un étranglement ou une vanne de détente.

6. Procédé selon l'une quelconque des revendications précédentes, **caractérisé en ce que** le fluide caloporteur, avant son entrée dans l'au moins un autre dispositif de transfert de chaleur (17), est comprimé à une pression de ≥ 190 bars et à une température de ≥ 190 °C.

7. Procédé selon l'une quelconque des revendications précédentes, **caractérisé en ce que** la vapeur (26) générée au moyen de l'au moins un autre dispositif de transfert de chaleur (17) est amenée à au moins un compresseur de vapeur (21) augmentant la pression de la vapeur et/ou à un surchauffeur qui est/sont raccordé(s) en aval de l'au moins un autre dispositif de transfert de chaleur (17) dans le sens d'écoulement de la vapeur.

8. Procédé selon la revendication 7, **caractérisé en ce que** la vapeur (26) générée dans l'au moins un autre dispositif de transfert de chaleur (17) est portée à une pression comprise entre 1 et 5 bars dans le surchauffeur et/ou **en ce que** la vapeur (26) générée dans l'au moins un autre dispositif de transfert de chaleur (17) est portée à une pression comprise entre 2 et 20 bars dans le ou les compresseurs de vapeur (21) augmentant la pression de la vapeur.

9. Procédé selon l'une quelconque des revendications précédentes, **caractérisé en ce que** les compresseurs (7, 16), les compresseurs et détendeurs (18) ou les turbines de détente disposés dans le circuit de fluide caloporteur (13) et dans le circuit de réfrigérant (4) et/ou au moins une partie des compresseurs (21 ; 21a - 21c) augmentant la pression de vapeur de la vapeur générée (26) sont au moins partiellement en liaison fonctionnelle mécanique avec une transmission et sont tous entraînés par cette seule transmission.

10. Procédé selon la revendication 9, **caractérisé en ce que** la transmission est formée comme une transmission à engrenage bull ou une transmission à grand engrenage et est de préférence entraînée par un seul moteur.

11. Système de génération de vapeur et de froid (1) pour la mise en œuvre d'un procédé selon l'une quelconque des revendications 1 - 10, comprenant une machine frigorifique à compression (2) et une pompe à chaleur haute température (3), qui sont reliées fonctionnellement l'une à l'autre par l'intermédiaire d'un dispositif de transfert de chaleur (8) incorporé dans le circuit de réfrigérant (4) de la machine frigorifique à compression (2) et le circuit de fluide caloporteur (13) de la pompe à chaleur haute température (3), extrayant de l'énergie thermique d'un réfrigérant circulant dans le circuit de réfrigérant (4) de la machine frigorifique à compression (2) et introduisant l'énergie thermique dans un fluide caloporteur circulant dans le circuit de fluide caloporteur (13) de la pompe à chaleur haute température (3), dans lequel, dans la machine frigorifique à compression (2), au moins un dispositif de transfert de chaleur (6) est incorporé dans le circuit de réfrigérant (4), auquel s'écoule un fluide réfrigérant (11) avec une température < 0 °C et au moyen duquel le froid est extrait du fluide réfrigérant (11) s'écoulant vers le dispositif de transfert de chaleur (6) et est introduit dans le réfrigérant circulant dans le circuit de réfrigérant (4) et s'écoulant vers ledit au moins un dispositif de transfert de chaleur (6) avec une température inférieure à celle du fluide réfrigérant (11), de sorte que la température du fluide de réfrigérant (11) du côté retour du dispositif de transfert de chaleur (6) a une température inférieure à celle du côté départ du dispositif de transfert de chaleur (6), et dans lequel un premier compresseur (7) ou un premier compresseur est incorporé dans le circuit de réfrigérant (4) de la machine frigorifique à compression (2), au moyen duquel le réfrigérant circulant dans le circuit de réfrigérant (4) est comprimé et ainsi chauffé et, ainsi chauffé, est amené au dispositif de transfert de chaleur (8), et dans lequel un deuxième compresseur ou deuxième compresseur (16) est disposé dans le circuit de fluide caloporteur (13) de la pompe à chaleur haute température (3), au moyen duquel le fluide caloporteur circulant dans le circuit de fluide caloporteur (13) et chauffé dans le dispositif de transfert de chaleur (8) au moyen de l'énergie thermique transférée du réfrigérant est comprimé à une telle pression et ainsi chauffé et, ainsi, chauffé, est alimenté vers un autre dispositif de transfert de chaleur (17) incorporé dans le circuit de fluide caloporteur (13), de telle sorte que, au moyen de l'énergie thermique extraite du fluide caloporteur dans l'autre dispositif de transfert de chaleur (17) et transférée à l'eau (25) circulant à travers l'autre dispositif de transfert de chaleur (17), l'eau (25) est évaporée en vapeur.

12. Système de génération de vapeur et de froid (1) selon la revendication 11, **caractérisé en ce que** le fluide caloporteur du circuit de fluide caloporteur (13) de la pompe à chaleur haute température (3) est le dioxyde de carbone (CO₂) et le réfrigérant du circuit de réfrigérant (4) de la machine frigorifique à compression (2) est l'ammoniac (NH₃).

13. Système de génération de vapeur et de froid (1) selon la revendication 11 ou 12, **caractérisé en ce que** la partie (8a) du dispositif de transfert de chaleur (8) incorporée dans le circuit de réfrigérant (4) de la machine frigorifique à compression (2) forme un condenseur pour le réfrigérant en circulation et la partie (8b) du dispositif de transfert de chaleur (8) incorporée dans le circuit de fluide caloporteur (13) de la pompe à chaleur haute température (3) forme un réchauffeur pour le fluide caloporteur en circulation.

14. Système de génération de vapeur et de froid (1) selon l'une quelconque des revendications 11 à 13, **caractérisé en ce que** l'au moins un dispositif de transfert de chaleur (6) incorporé dans le circuit de réfrigérant (4) de la machine frigorifique à compression (2) forme un évaporateur pour le réfrigérant en circulation et l'au moins un autre dispositif de transfert de chaleur (17) incorporé dans le circuit de fluide caloporteur (13) de la pompe à chaleur haute température (3) forme un refroidisseur de gaz pour le fluide caloporteur en circulation.

15. Système de génération de vapeur et de froid (1) selon l'une quelconque des revendications 11 à 14, **caractérisé en ce que** la partie (8b) du dispositif de transfert de chaleur (8) incorporée dans le circuit de fluide caloporteur (13) de la pompe à chaleur haute température (3) et configurée en tant que chauffage est configurée en tant qu'échangeur de chaleur et/ou ledit au moins un autre dispositif de transfert de chaleur (17) incorporé dans le circuit de fluide caloporteur (13) de la pompe à chaleur haute température (3) est configuré en tant qu'échangeur de chaleur.

16. Système de génération de vapeur et de froid (1) selon l'une quelconque des revendications 11 à 15, **caractérisé en ce qu'**au moins un compresseur de vapeur (21) augmentant la pression de la vapeur et/ou un surchauffeur est/sont monté(s) en aval dudit au moins un autre dispositif de transfert de chaleur (17) incorporé dans le circuit de fluide caloporteur (13) de la pompe à chaleur haute température (3) dans le sens d'écoulement de la vapeur générée (26).

17. Système de génération de vapeur et de froid (1) selon la revendication 16, **caractérisé en ce que** ledit au moins un compresseur de vapeur (21) présente une compression multi-étagée (21a, 21b, 21c) de la vapeur (26).

18. Système de génération de vapeur et de froid (1) selon l'une quelconque des revendications 11 à 17, **caractérisé en ce que** le premier compresseur (7) ou premier compresseur du circuit de réfrigérant (4) de la machine frigorifique à compression (2), le deuxième compresseur (16) ou deuxième compresseur du circuit de fluide caloporteur (13) de la pompe à chaleur haute température (3), un détendeur (18) ou détendeur à vis ou une turbine de détente du circuit de fluide caloporteur (13) de la pompe à chaleur haute température (3) et/ou le ou les ou au moins une partie du ou des compresseurs (21 ; 21a, 21b, 21c) augmentant la pression de vapeur de la vapeur générée (26) sont disposés sur une transmission.

19. Système de génération de vapeur et de froid (1) selon la revendication 18, **caractérisé en ce que** la transmission est configurée comme une transmission à engrenage bull ou à grand engrenage et est de préférence entraînée par un seul moteur.
